(19) Europäisches Patentamt
European Patent Office
Office européen des brevets

(11) Veröffentlichungsnummer: **0 354 377 A2**

# (12) EUROPÄISCHE PATENTANMELDUNG

(21) Anmeldenummer: **89112886.0**

(51) Int. Cl.4: **C08G 65/40**

(22) Anmeldetag: **14.07.89**

(30) Priorität: **23.07.88 DE 3825149**
**02.12.88 DE 3840617**

(43) Veröffentlichungstag der Anmeldung:
**14.02.90 Patentblatt 90/07**

(84) Benannte Vertragsstaaten:
**DE ES FR GB IT NL**

(71) Anmelder: **BAYER AG**

**D-5090 Leverkusen 1 Bayerwerk(DE)**

(72) Erfinder: **Genz, Joachim, Dr.**
**Bodelschwinghstrasse 16**
**D-4150 Krefeld(DE)**
Erfinder: **Tresper, Erhard**
**Moerser Strasse 394**
**D-4150 Krefeld(DE)**
Erfinder: **Idel, Karsten-Josef**
**Am Schwarzkamp 38**
**D-4150 Krefeld(DE)**
Erfinder: **Bottenbruch, Ludwig**
**Woehlerstrasse 5**
**D-4150 Krefeld(DE)**
Erfinder: **Eckhardt, Volker**
**Bodelschwinghstrasse 14**
**D-4150 Krefeld(DE)**

## (54) Verfahren zur Herstellung von aromatischen Polyetherketonen.

(57) Die Erfindung betrifft ein Verfahren zur Herstellung kristalliner, aromatischer Polyetherketone in Lactamen als Lösungsmittel. Die hergestellten Polymeren haben ein hohes Molekulargewicht, hohe Temperaturbeständigkeit, hohe Beständigkeit gegen die Einwirkung von Chemikalien sowie gute mechanische Eigenschaften.

EP 0 354 377 A2

## Verfahren zur Herstellung von aromatischen Polyetherketonen

Die Erfindung betrifft ein Verfahren zur Herstellung kristalliner, aromatischer Polyetherketone in Lactamen als Lösungsmittel. Die hergestellten Polymeren haben ein hohes Molekulargewicht, hohe temperaturbeständigkeit, hohe Beständigkeit gegen die Einwirkung von Chemikalien sowie gute mechanische Eigenschaften.

Kristalline, aromatische Polyetherketone sind bekannt. Sie können z.B. durch Umsetzung eines Dialkalimetallsalzes eines Bisphenols mit einer Dihalogenverbindung, die eine Keto-Gruppe enthält, in Gegenwart eines aromatischen Sulfons bei 250° - 400° C hergestellt werden (z.B. US-PS 4 010 147) und EP-A 1879 oder durch Umsetzung eines Ketogruppen-haltigen Halogenphenols mit einem Alkalimetall-Carbonat in N-Methylpyrrolidon, einem aliphatischen Sulfon oder einem aromatischen Sulfon bei 200° - 400° C (z.B. US-A 4 113 699).

Die Verfahren haben jedoch den Nachteil, daß nur spezielle Dihalogenketoverbindungen, z.B. Difluorbenzophenon zur Herstellung der Polymeren eingesetzt werden können (EP-A 1879). Diese sind jedoch sehr aufwendig herzustellen und dementsprechend teuer und unwirtschaftlich.

Aus der DE-A 2 220 079 ist bekannt, aus Dihalogenaromaten und Dihydroxiaromaten in $C_1$-$C_4$-Alkyllactamen als Lösungsmittel aromatische Polyether und Polythioether herzustellen.

Um hochmolekulare, Kristalline, aromatische Polyetherketone herstellen zu können, ist es vorteilhaft, ein Lösemittel zu verwenden, das die entstandenen Polymeren löst. Kristalline Polyetherketone sind üblicherweise in herkömmlichen Lösemitteln unlöslich. Das bei der Herstellung verwendete Lösemittel sollte polar sein, damit bei der Kondensationsreaktion Polymere mit hohen Molekulargewichten gebildet werden können. Außerdem sollte es thermisch stabil sein, da die Umsetzung üblicherweise bei hohen Temperaturen durchgeführt wird.

Als Lösemittel für die Herstellung von Polyetherketonen sind z.B. bekannt: aliphatische Sulfone, aromatische Sulfone, N-Methylpyrrolidon. Selbst diese Lösemittel sind jedoch nicht völlig zufriedenstellend für die Synthese hochmolekularer, kristalliner, aromatischer Polyetherketone. Wird beispielsweise ein aliphatisches Sulfon als Lösemittel verwendet, können während der Reaktion unerwünschte Effekte wie Gelierung des Ansatzes oder Verfärbung auftreten: Die Reaktionszeiten sind bei sehr hohen Reaktionstemperaturen lange.

Es wurde nun gefunden, daß bei Verwendung bestimmter N-substituierter Lactame als Lösemittel kristalline, aromatische Polyetherketone mit hohen Molekulargewichten hergestellt werden können. In den verwendeten N-substituierten Lactamen sind die hergestellten aromatischen Polyetherketone löslich.

Gegenstand der Erfindung ist daher ein Verfahren zur Herstellung kristalliner, aromatischer Polyetherketone aus aromatischen Dihydroxiverbindungen und aromatischen Dihalogenverbindungen welche mindestens eine Ketogruppe enthalten oder aromatischen Monohydroximonohalogenverbindungen, welche mindestens eine Ketogruppe enthalten, gegebenenfalls in Gegenwart von Alkali-Verbindungen, dadurch gekennzeichnet, daß als Lösemittel N-substituierte Lactame der Formel (I)

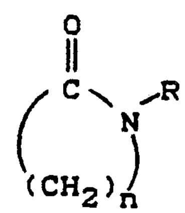

(I),

in welcher
R für $C_2$-$C_{10}$-Alkyl, $C_5$-$C_{24}$-Cycloalkyl, $C_6$-$C_{18}$-Aryl, $C_7$-bis $C_{25}$-Alkylaryl, $C_7$-$C_{25}$-Arylalkyl steht
und
n für die Zahl 3, 4 und 5 steht,
eingesetzt werden.

Steht der Index n für die Zahl 5, steht R für Ethyl, n-Propyl, iso-Propyl, n-Butyl, sec.-Butyl, tert.-Butyl, $C_5$-$C_{10}$ Alkyl, $C_5$-$C_{24}$ Cycloalkyl, $C_6$-$C_{18}$ Aryl, $C_7$-$C_{25}$ Alkylaryl und $C_7$-$C_{25}$ Arylalkyl.

Die erfindungsgemäße Herstellung der Polyetherketone kann beispielsweise durchgeführt werden, indem etwa äquivalente Mengen einer aromatischen Dihydroxy-Verbindung mit freien Hydroxyl-Gruppen, mit aromatischen Dihalogen-Ketoverbindungen in einem N-substituierten Lactam in Gegenwart einer Alkaliverbindung umgesetzt werden (Reaktionstyp 1) oder indem Monohydroxymonohalogen-Verbindungen mit einer freien Hydroxylgruppe in einem N-substituierten Lactam in Gegenwart einer Alkaliverbindung polymerisiert werden (Reaktionstyp 2) oder indem Alkalisalze von aromatischen Dihydroxyverbindungen mit aromatischen Dihalogen-Ketoverbindungen in einem N-substituierten Lactam umgesetzt werden (Reaktionstyp 3) oder indem Alkalisalze einer Monohydroxymonohalogen-Verbindung in einem N-substituierten Lactam umgesetzt werden (Reaktonstyp 4).

Für die Reaktion nach Reaktionstyp 1,2 oder 3 verwendbare Dihydroxyverbindungen sind divalente Phenole der Formel (II)

HO-Ar-OH (II),

in welcher

Ar für aromatische $C_6$-$C_{30}$-Reste steht,

sowie deren (Erd)Alkalisalze (z.B. Na-, K-Salze).

Für die Umsetzung geeignete aromatische Dihdyroxyverbindungen sind z.B. einkernige divalente Phenole, beispielsweise Hydrochinon, mehrkernige Dihydroxyverbindungen, beispielsweise 4,4′-Dihydroxydiphenyl, Bisphenole, beispielsweise 2,2-Bis-(4-hydroxyphenyl)-propan, Bis-(4-hydroxyphenyl)methan, 4,4′-Dihydroxybenzophenon, 4,4′-Dihydroxydiphenylether, 4,4′-Dihydroxydiphenylsulfid, 1,4-Bis-(4-hydroxybenzoyl)benzol und 1,3-Bis-(4-hydroxybenzoyl)benzol, sowie deren kernsubstituierte (z.B. mit Halogen wie Cl, Br, $C_1$-$C_4$-Alkyl) Derivate. Sie können allein oder als Gemisch eingesetzt werden.

Bevorzugt sind 4,4′-Dihydroxydiphenylether, Hydrochinon und 4,4′-Dihydroxybenzophenon.

Für die Umsetzung nach Reaktionstyp 1, 2 oder 3 geeignete aromatische Dihalogen-Ketoverbindungen entsprechend der Formel (III)

X-Ar$^1$-X (III),

in welcher

Ar$^1$ ein aromatischer $C_6$-$C_{30}$-Rest ist, der mindestens eine Keto-Gruppe enthält, und

X für Halogen (z.B. F, Cl, Br), das in ortho- oder para-Position an den jeweils letzten aromatischen Kern angebunden ist, steht.

Bevorzugte aromatische Dihalogen-Ketoverbindungen entsprechen den Formeln (IV), (V) oder (VI)

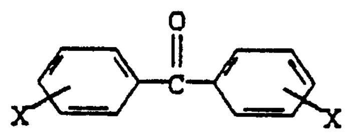

(IV),

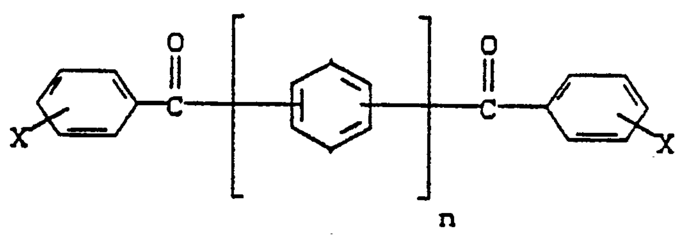

(V),

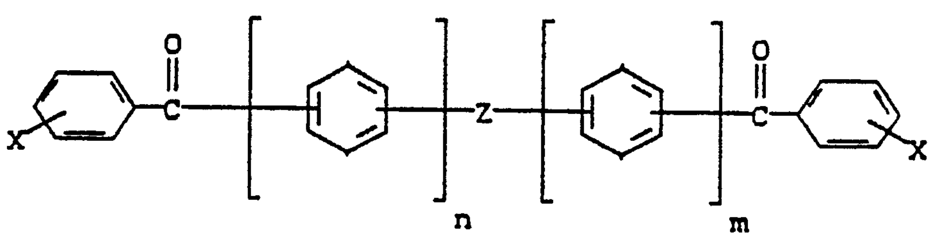

(VI),

in welchen

X für Halogen (F, Cl, Br) steht, das in ortho- oder para-Stellung an den jeweils letzten aromatischen Kern angebunden ist, wobei gegebenenfalls eine Gruppe X eine OH-Gruppe sein muß (Reaktionstyp 4),

Z für eine Ether-Gruppe, eine Thioether-Gruppe, eine Carbonyl-Gruppe oder eine Sulfon-Gruppe steht, und

m und n für die Zahl 1, 2 und 3 steht.

Wird die Umsetzung nach Reaktionstyp 4 durchgeführt, steht in den Formeln IV, V und VI ein X für eine OH-Gruppe (Formeln IVa, Va, VIa) und gegebenenfalls für deren (Erd)Alkalisalze (z.B. Na-, K-Salz).

Für die Umsetzung geeignete, aromatische Dihalogen-Ketoverbindungen können beispielsweise 4,4′-Difluorbenzophenon, 4,4′-Dichlorbenzophenon, 2,4′-Dichlorbenzophenon, Bis-1,4-(4-fluorbenzoyl)benzol, Bis-1,4-(4-chlorbenzoyl) benzol, Bis-1,3-(4-chlorbenzoyl)benzol, Bis-4,4′-(4-fluorbenzoyl)biphenyl, Bis-4,4′-(chlorbenzoyl)biphenyl, Bis-4,4′-(4-chlorbenzoyl)biphenyl, Bis-4,4′-(4-fluorbenzoyl)diphenylether, Bis-4,4′-(4-chlorbenzoyl) diphenylether u.s.w. sein. Sie können allein oder als Gemisch eingesetzt werden.

Bevorzugte Dihalogen-Ketoverbindungen der Formel (III) haben vorzugweise ein Halogenatom in para-Position am jeweilig letzten aromatischen Kern.

Bevorzugtes Halogen ist Chlor.

Besonders bevorzugte aromatische Dihalogen-Ketoverbindungen sind 4,4′-Dichlorbenzophenon und Bis-1,4-(4-chlorbenzoyl)benzol.

Für die Umsetzung geeignete Monohydroxymonohalogen-Verbundungen der Formeln IVa, Va und VIa können durch die Formel (VII)

$X\text{-}Ar^1\text{-}OH$ (VII),

in welcher

$Ar^1$ und X die bei Formel (III) angegebene Bedeutung haben,

wiedergegeben werden.

Anstelle der Verbindungen mit freien Hydroxyl-Gruppen der Formeln II und VII, können ebenso deren (Erd)Alkali-Salze (z.B. Na-, K-Salze) eingesetzt werden und zwar bei allen 4 möglichen Reaktionstypen.

Für die Umsetzung geeignete Monohydroxymonohalogen-Verbindungen können beispielsweise 4-Fluor-4′-hydroxybenzophenon, 4-Chlor-4′-hydroxybenzophenon, 4-(4-Fluorbenzoyl)-4′-hydroxybiphenyl, 4-(4-Chlorbenzoyl)-4′-hydroxybiphenyl, 4-(4-Fluorbenzoyl)-4′-hydroxydiphenylether, 4-(4-Chlorbenzoyl)-4′-hydroxydiphenylether, 4-Fluor-4″-hydroxyterephthalophenon, 4-Chlor-4″-hydroxytrephthalophenon, 4-Fluor-4″-hydroxyisophthalophenon, 4-Chlor-4″-hydroxyisophthalophenon u.s.w., sowie deren Alkali-Salze sein.

Sie können allein oder als Mischung eingesetzt werden. Ihre Alkalimetallsalze werden nach den üblichen Verfahren erhalten, beispielsweise durch Umsetzung der freien Hydroxylgruppen mit Alkalihydroxiden.

Bevorzugtes Halogen in der Formeln IV, V, VI und VII ist Chlor.

Eine bevorzugte Monohydroxymonohalogen-Verbindung ist 4-Chlor-4′-hydroxybenzophenon bzw. das (Erd)Alkalimetallsalz (Na, K-Salz) davon.

Erfindungsgemäß wird als Lösemittel ein N-substituertes Lactam der Formel (I) verwendet, beispielsweise N-Ethyl-Pyrrolidon, N-n-Propylpyrrolidon, N-Isopropylpyrrolidon, N-tert.-Butylpyrrolidon, N-Cyclohexylpyrrolidon, N-Isooctylpyrrolidon, N-Benzyl-Pyrrolidon, N-Phenyl-Pyrrolidon, N-Ethyl-Caprolactam, N-n-Propyl-Caprolactam, N-Isopropyl-Caprolactam, N-tert.-Butyl-Caprolactam, N-Cyclohexyl-Caprolactam, N-Isooctyl-Caprolactam, N-Benzyl-Caprolactam, N-Phenyl-Caprolactam u.s.w.

Die erfindungsgemäß verwendeten Lösemittel haben Schmelzpunkte unterhalb Raumtemperatur, können also flüssig gehandhabt werden. Sie haben eine sehr hohen Siedepunkt eine sehr gute thermische Stabilität und sind stark polar. Sie sollten vorzugsweise das gebildete aromatische Polyetherketon lösen können.

Erfindungsgemäß können auch wenig reaktive aromatische Dichlor-Ketoverbindungen zu Polyetherketonen mit hohen Molekulargewichten, ausgezeichneter Farbe und hoher thermischer Stabilität umgesetzt werden.

Die Lösemittel können allein oder als Gemisch eingesetzt werden.

Die Umsetzung einer aromatischen Dihydroxyverbindung mit einer aromatischen Dihalogen-Ketoverbindung oder die Umsetzung einer Monohydroxymonohalogen-Ketoverbindung mit freien Hydroxylgruppen zu kristallinen, aromatischen Polyetherketonen wird in Gegenwart einer Alkaliverbindung durchgeführt.

Die Umsetzung der Alkalimetallsalze der Dihydroxiverbindung kann ohne Zusatz von Alkaliverbindung durchgeführt werden.

Für die Umsetzung geeignete Alkaliverbindungen sind beispielsweise Hydroxide, Carbonate, Bicarbonate, Fluoride, Hydride, $C_1$-$C_{10}$-Alkoxide und $C_1$-$C_5$-Alkylate von Alkalimetallen (Li, Na, K). Bevorzugte Alkaliverbindungen sind Carbonate und Bicarbonate. Bevorzugtes Alkalimetall ist Kalium.

Die Umsetzung von aromatischen Dihydroxyverbindungen der Formel (II) mit aromatischen Dihalogen-Ketoverbindungen der Formel (III) sowie die Umsetzung von aromatischen Monohydroxymonohalogen-Verbindungen der Formel (VII) mit jeweils freien Hydroxylgruppen zu kristallinen, promatischen Polyetherketonen wird durchgeführt, indem man die Reaktionskomponenten in Gegenwart der Alkaliverbindung in dem Lösemittel der Formel (I) löst, die Reaktionsmischung allmählich auf ca. 120° - 200° C aufheizt, bei dieser Temperatur durch ein zugesetztes azeotropes Schleppmittel gebildetes Reaktionswasser entfernt, anschließend das azeotrope Schleppmittel durch Reaktionstemperaturerhöhung destillativ entfernt und schließlich auf Reaktionstemperaturen von 200° - 400° C aufheizt und 0.1 - 24h bei dieser Temperatur hält. Für die

Erzielung hoher Molekulargewichte werden bei der Umsetzung von aromatischen Dihydroxiverbindungen mit aromatischen Dihalogen-Ketoverbindungen etwa äquimolare Mengen der Reaktionskomponenten eingesetzt. Es kann zweckmäßig sein, eine der Rekationskomponenten im Überschuß einzusetzen, wenn z.B. niedrigere Molekulargewichte erhalten werden sollen.

Bei der Umsetzung der freie Hydroxylgruppen tragenden aromatischen Dihydroxyverbindungen mit aromatischen Dihalogen-Ketoverbindungen und bei der Umsetzung von freie Hydroxylgruppen tragenden Monohydroxymonohalogen-Ketoverbindungen zu aromatischen Polyetherketonen werden die Alkaliverbindungen etwa äquivalent zu den Hydroxyl gruppen eingesetzt. Bevorzugt werden pro Val freie Hydroxylgruppen 1.0 bis 1.2 Val Alkaliverbindungen eingesetzt.

Als azeotropes Schleppmittel werden solche eingesetzt, die mit Wasser ein Azeotrop bilden und vorzugsweise einen niedrigeren Siedepunkt besitzen als das erfindungsgemäß verwendete Lösemittel, z.B. Benzol, Toluol, Xylol. Bevorzugt ist Toluol.

Die Umsetzung von Alkalimetallsalzen der freien Hydroxylgruppen der aromatischen Dihydroxyverbindungen mit aromatischen Dihalogen-Ketoverbindungen, sowie die Umsetzung der Alkalimetallsalze der freien Hydroxylgruppen der Monohydroxymonohalogen-Ketoverbindungen zu aromatischen Polyetherketonen wird in analoger Weise wie die Umsetzung der Reaktionskomponenten mit freien Hydroxylgruppen durchgeführt, gegebenenfalls ohne Zugabe von azeotropem Schleppmittel und Alkaliverbindung.

Bei den Reaktionstypen 1, 2, 3 und 4 betragen die Reaktemperaturen 180° bis 400° C, bevorzugt 200° bis 280° C. Die Reaktionszeiten sind 0.1 bis 24 h, bevorzugt 0.5 bis 4 h.

Die erfindungsgemäß hergestellten aromatischen Polyetherketone haben hohe Molekulargewichte, eine relative Viskosität von >1.2 (gemesen in Schwefelsäure in einer Konzentration von 1 g/100 ml), vorzugsweise 1,2 - 2,8.

Die relative Viskosität kann nach der Formel

$$\eta_{rel} = \frac{\eta}{\eta_0}$$

berechnet werden, wobei $\eta_0$ die Viskosität des verwendeten Lösemittels, $\eta$ die Viskosität der Polymerlösung und $\eta_{rel}$ die relative Viskosität bedeuten.

Die hochkristallinen, aromatischen Polyetherketone, die nach dem erfindungsgemäßen Verfahren hergestellt wurden, besitzen ausgezeichnete thermische Stabilität, ausgezeichnete Chemikalienresistenz sowie gute mechanische Eigenschaften. Sie können zu Formkörpern, Filmen, Fasern oder Oberflächenbeschichtungen verarbeitet werden, mit anderen Polymeren, mit Füllstoffen, z.B. Glasfasern, Kohlefasern, Aramid-Fasern, Calciumcarbonat, Calciumsilicat usw. abgemischt werden.

Beispeile:

Beispiel 1:

In einen 3000 ml Dreihalsrundkolben mit Glasrührer, Wasserabscheider mit Rückflußkühler und Thermometer werden 1.0 Mol 4,4′-Dichlorbenzophenon, 1.0 Mol Hydrochinon, 1200 ml N-Ethylpyrrolidon, 360 ml Toluol und 1.2 Mol $K_2CO_3$ vorgelegt. Die Reaktionsmischung wird unter Rühren aufgeheizt. Bei einer Innentemperatur bis zu 200° C wird das entstehende Reaktionswasser entfernt. Dieser Vorgang dauert 1 bis 5 Stunden. Nach Entfernen des Reaktionswassers wird auf ca. 210° C aufgeheizt und für ca. 90 Minuten weitergerührt.

Zur Koagulation des entstandenen Polymeren wird die noch heiße Reaktionsmischung in einer 10%igen wäßrigen Phosphorsäurelösung gefällt. Anschließend wird das ausgefallene Polymer abfiltriert und mehrmals in Wasser aufgeschlämmt, bis es elektrolytfrei ist. Zur Entfernung eventuell vorhandener Restlösemittelmengen wird anschließend mit Methanol aufgekocht, abfiltriert und getrocknet. Die Ausbeute beträgt mehr als 93% der Theorie.

Vom getrockneten Produkt wird in 100%iger Schwefelsäure in einer Konzentration von 1 g/100 ml die relative Viskosität bestimmt. Sie betrug $\eta_{rel}$ = 1.212.

Beispiel 2:

In einem 3000 ml Dreihalsrundkolben mit Glasrührer, Wasserabscheider mit Rückflußkühler und Thermometer werden 1.0 Mol 4,4′-Dichlorbenzophenon, 1.0 Mol Hydrochinon, 1200 ml N-Benzylpyrrolidon, 360 ml Toluol und 1.2 Mol $K_2CO_3$ vorgelegt. Das Reaktionsverfahren läuft analog zum Beispiel 1 ab.

Es wird ein Polyetherketon mit einer relativen Viskosität von $\eta_{rel}$ = 1.227 erhalten.

Beispiel 3:

In eine Reaktionsapparatur gemäß Beispiel 1 werden 1.0 Mol 4,4′-Dichlorbenzophenon, 1.0 Mol Hydrochinon, 1200 ml N-Phenylpyrrolidon, 360 ml Toluol und 1.2 Mol $K_2CO_3$ eingewogen. Das Reaktionsverfahren läuft analog zu Beispiel 1 ab. Das erhaltene Polyetherketon hat eine relative Viskosität von $\eta_{rel}$ = 1.214.

Beispiel 4:

Beispiel 1 wird wiederholt. Als Lösemittel wird N-Phenylcaprolactam verwendet. Das enthaltene Polyetherketon hat eine relative Viskosität von $\eta_{rel}$ = 1.280.

**Ansprüche**

Verfahren zur Herstellung kristalliner, aromatischer Polyetherketone aus aromatischen Dihydroxiverbindungen und aromatischen Dihalogenverbindungen welche mindestens eine Ketogruppe enthalten oder aromatischen Monohydroximonohalogenverbindungen, welche mindestens eine Ketogruppe enthalten, gegebenenfalls in Gegenwart von Alkali-Verbindungen, dadurch gekennzeichnet, daß als Lösemittel N-substituierte Lactame der Formel (I)

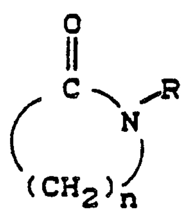

(I),

in welcher
R für $C_2$-$C_{10}$-Alkyl, $C_5$-$C_{24}$-Cycloalkyl, $C_6$-$C_{18}$-Aryl, $C_7$- bis $C_{25}$-Alkylaryl, $C_7$-$C_{25}$-Arylalkyl steht
und
n für die Zahl 3,4 und 5 steht,
eingesetzt werden.